# EUROPEAN PATENT APPLICATION

(11) **EP 4 417 042 A2**
(43) Date of publication of application: **21.08.2024**
(21) Application number: 24177999.0
(22) Date of filing: 27.12.2016
(51) Int. Cl.: A01K 15/02

(54) **VEGETABLE AND FRUIT KABOB PET TREAT**

(30) Priority: 28.12.2015 US 201562271854 P
(62) Divisional of application: 20185913.9
(71) Applicant: Spectrum Brands, Inc., Middleton, WI 53562 (US)
(72) Inventor: Harbour, Stacey, Dardenne Prairie, 63368 (US); Sims, Casey, Saint Louis, 63118 (US); Carley, Joseph, Christopher, Blacksburg, 24060 (US)
(74) Representative: Zimmermann & Partner Patentanwälte mbB

(57) **Abstract**

A composition and process for making pet food treats is described herein. Auxiliary ingredients are combined to form a plant mixture. The plant mixture is formed into portions. The portions of plant mixture are positioned on a chew stick that comprises rawhide. The pet treat gives the appearance of a grilled shish kabob, where the plant portions are meant for initial taste, while the chew stick will provide the dog with a longer-lasting chewing portion.

## Description

### Cross-Reference to Related Applications

This application is being filed on 27 December 2016, as a PCT International and claims the benefit of U.S. Provisional Application No. 62/271,854, filed December 28, 2015, which is incorporated herein by reference in its entirety.

### Background

One of the main attributes of chew type products is a toughness and flexibility to the point where it takes the dog a long time to consume the product. A great majority of the chew style products include rawhide. While rawhide is used as a base material, it has limited acceptability because it does not maintain a dog's interest. Manufacturers have attempted to solve this problem of reduced acceptability by incorporating numerous ingredients and processing techniques into the manufacture of rawhide-based chews for dogs, such as incorporating meat in the middle of a rawhide stick.

Despite this, the basic problem remains. As ingredients or processing techniques are utilized with rawhide to increase palatability, they typically weaken the basic structure of the rawhide and produce a less acceptable product from the standpoint of extended chew time. Further, the rawhide stick does not provide a visually appealing treat for dog. The pet treat also does not give the pet owner a visually acceptable reaction when purchasing the pet treat. What is needed is a pet treat that provides a visually appealing product that stimulates a human to purchase the pet treat. What is needed is a pet treat that provides a palatable product for a pet and can provide an initial taste reward, but also gives the dog a chew portion for sustained pet treat duration.

The prior art demonstrates a long history of utilizing rawhide in dog chews, Fisher (U.S. Pat. No. 2,988,045) demonstrated the basic techniques of how rawhide can be separated at the tannery and split into layers that can be formed into shapes followed by dehydration to produce a shelf-stable rawhide chew for dogs. A wide range of patents for rawhide chew style products followed, teaching various forms, shapes and methods for utilizing a basic rawhide fraction as a dog chew. This included Lehn (U.S. Pat. No. 4,702,929) which teaches a method for extruding rawhide byproduct fraction, called spetches, with starch to form a dog chew in stick form. Spanier (U.S. Pat. No. 5,047,231) teaches a method of soaking an inorganic pyrophosphate salt into rawhide to form a chew capable of reducing tartar accumulation on the dog's teeth. Perlberg (U.S. Pat. No. 6,223,693) demonstrates a method of soaking rawhide in a humectant and soft edible binder to produce a flexible edible chew. Twain (U.S. Pat. No. 6,425,348) taught a method for producing a chewable pet shelter from rawhide which incorporated chemical flavoring which would appeal to the pet

Kirch (U.S. Pat. No. 6,840,196) demonstrates a pet chew produced by folding a first sheet of rawhide around a second sheet of rawhide. The second sheet is impregnated with a flavoring and protrudes from under the first sheet of rawhide. This system served to increase the palatability of the chew while at the same time reduced the incident of rug staining which can be a problem when the flavoring is present on the surface of the product.

Hingst (U.S. Pat. No. 6,895,900) disclosed a combination rawhide and pigskin product where sheets of rawhide and pigskin are sandwiched or intertwined together to form a treat with improved flavor. Jia (U.S. Pat. No. 6,935,275) teaches a method for producing a dog treat by rolling a precut and flavored rawhide piece into a cylinder with strips of hide extending from the outer ends of the cylinder.

Hague (U.S. Pat. No. 6,886,497) disclosed a product and method for infusing a rawhide or pigskin with a mint, or chlorophyll, flavoring and applying perforations to the hide so that a dog's teeth would penetrate into the product to assist in the cleaning of the dog's teeth.

Some of the most commercially successful products utilizing rawhide as dog treats have taken the approach of incorporating a meat fraction in conjunction with the rawhide to significantly increase the palatability of the chew. Sherrill (U.S. Pat. No. 5,673,653) disclosed a product and process of wrapping jerky sheets on the inside of a roll of rawhide. The jerky fraction protruded from the ends and the horizontal seam of the outside layer so that the dog could quickly be subjected to the flavor of the dehydrated meat fraction. This product is commercially known as a "Dingo" treat. Only a small portion of meat fraction however is initially available to the dog and the manufacturing method of rolling rawhide within sheets of jerky significantly reduce the quantity of meat that can be incorporated on a dry weight basis.

Andersen (U.S. Pat. No. 6,277,420) demonstrates a method of making a preformed rawhide tube and depositing a shelf-stable liquid meaty filling into the cavity of the tube which gels and then forms a solid matrix on the inside of the rawhide. While this system incorporates large ratios of meaty filling fraction to rawhide, the chew time is somewhat reduced by the high moisture present in the system.

Brown (U.S. Pat. No. 6,886,496) has attempted to solve this problem by producing a pre-extruded dried meaty log that could be placed inside of a rolled rawhide cylinder. While this would result in a somewhat extended chew time over many of the earlier treats, a limited fraction of meat is available on the surface of the final chew to maintain a dog's interest for an extended period of time. Further, the initial meat reward may not be sufficient to entice the dog to finish the treat leaving a remnant of the treat behind.

Yet there is nothing in the prior art that provides a dry outer portion that is substantially free or free from meat products for initial flavor enhancement. Further there is nothing in the prior art that provide a dry outer portion that is substantially free, or free from meat products with a rawhide chew for a subsequent pet chew that is appealing to a pet. The pet treat being sized to provide an intermediary pet treat that is more substantial than a "reward treat," (i.e. dog biscuit) but will take less time to consume when compared to a classic rawhide bone.

### Summary of the Invention

A composition and process for making pet food treats is described herein. Plant material and auxiliary ingredients are combined to form a plant mixture. The plant mixture is formed into portions. The portions of plant mixture are positioned on a chew stick that comprises rawhide. The pet treat gives the appearance of a grilled shish kabob, where the plant portions are meant for initial taste and the chew stick will provide the dog with a longer-lasting chewing portion.

### Brief Description of the Drawings

FIG. 1 illustrates one embodiment of a process of making a plant mixture.
FIG. 2 illustrates one embodiment of a process of making a chew stick.
FIG. 3 illustrates one embodiment of a process of making a pet chew.
FIG. 4 illustrates one embodiment of a process of drying a pet treat.
FIG. 5 illustrates one embodiment of a process of inspecting a pet treat prior to shipment.
FIG. 6 illustrates one embodiment of a pet treat manufacturing process.
FIG. 7 is a perspective view of a pet treat
FIG. 8 is an end elevation view of a pet treat.
FIG. 9 is a side elevation view of a pet treat.

### Detailed Description

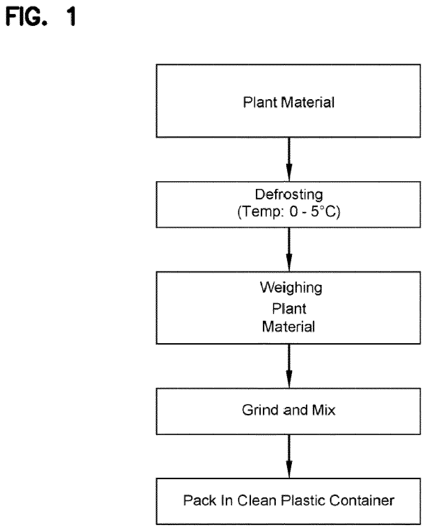

The method of making a pet treat is described herein. FIGs 1-6 illustrate schematic depictions of particular aspects of the methods of making a pet treat. The method comprises forming a plant mixture into portions and positioning one or more portions on a chew stick, and drying the pet treat. As shown in FIG. 1, the plant base is made from a plant base material, such as a fruit, vegetable, vegetable protein, fruit extract, vegetable extract and combinations thereof that can be consumed by a domestic pet. The plant material may be fresh, dehydrated, powdered, an extract or frozen. In embodiments where the plant material is frozen the plant material is defrosted at about 0 degrees Celsius to about 5 degrees Celsius. Once the plant material is defrosted, the plant material is weighed. Once the predetermined amount of plant material is weighed, the plant material is placed in a grinder, the plant material(s) is ground and mixed with the specific desired ratio of plant material (s) and stored in a container as a plant base. It should be noted that the plant base may be frozen for later use, or may be used immediately after the plant base is prepared.

In one example embodiment, the plant base does not include any meat product, such as beef, pork, lamb, goat, horse, buffalo, venison, elk, moose, bone-in chicken, turkey, fish, or any other seafood. The term "meat" as described herein is intended to encompass portions of animals, mammal and non-mammal, that can be used for a pet treat. This includes but is not limited to soft tissue, internal organs, cartilage and bone.

A plant base material, as used herein, means a fruit, vegetable, vegetable protein, fruit extract, and/or vegetable extract that can be consumed by a domestic pet, such as a dog. The plant based material may be produced in various sizes or shapes. In particular, following mixture, the textured vegetable protein may be cut or shaped to look like meat portions on a shish kabob.

In one embodiment of the invention, the plant base may include fruits such as, apple, apricot, banana, blackberry, blackcurrant, blueberry, coconut, cherry, cherimoya, date, durian, fig, feijoa, gooseberry, grape, grapefruit, jackfruit, jambul, kiwifruit, kumquat, lemon, lime, loquat, lychee, mango, mangosteen, melon, cantaloupe, honeydew, watermelon, nectarine, orange, passionfruit, peach, pear, plum, prune, pineapple, pomegranate, pommelo, raspberry, rambutan, redcurrant, satsuma, strawberry, tangerine, ugli fruit and combinations thereof.

The plant base may include vegetables such as, artichoke, asparagus, avocado, bamboo shoots, bean sprouts, beans, beet, endive, bell pepper, broccoli, brussels sprouts, cabbage, calabaza, carrot, cauliflower, celery, cucumber, radish, eggplant, garlic, fiddlehead, galangal, ginger, beet greens, collard greens, dandelion greens, kale, mustard, spinach, Swiss chard, turnip greens, Jerusalem artichoke, jícama, lettuce, mushrooms, okra, , onion, parsley, parsnip, peas, peppers, plantain, pumpkin, radicchio, radish, rutabaga, spinach, squash, sweet potato, tomato, turnip, water chestnut, yams, and combinations thereof.

Pet treat may also include a starch composition which comprises any carbohydrate of natural or vegetable origin. The starch may include amylose and/or amylopectin and may be extracted from plants, including but not limited to potatoes, rice, tapioca, corn and cereals such as rye, wheat, and oats. The starch may also be extracted from fruits, nuts and rhizomes, or arrowroot, guar gum, locust bean, arracacha, buckwheat, banana, barley, cassava, konjac, kudzu, oca, sago, sorghum, sweet potato, taro, yams, fava beans, lentils and peas. The starch may be present between about 6-80% including but not limited to 10%, 15%, 20%, 25%, 30%, 35%, 40%, 45%, 50%, 55%, 60%, 65%, 70%, 75% and 80%. Alternatively, the starch composition may be at least 10%, 15%, 20%, 25%, 30%, 35%, 40%, 45%, 50%, 55%, 60%, 65%, 70%, 75% or 80%.

In some embodiments, starch is used to provide structural support to the plant mixture. The starch employed herein may be raw starch, which may be understood as starch that has not seen a prior thermal molding history, such as extrusion or other type of melt processing step. The raw starch itself may also be native, which may be understood as unmodified starch recovered in the original form by extraction and not physically or chemically modified. The raw starch may also be in powder form of varying particle size, which may be understood as milled and/or pre-sifted. It should be understood that the raw starch may also have varying degrees moisture present. The starch composition may include cellulose. The cellulose may be, for example, a long-chain polymer of polysaccharide carbohydrate. The cellulose may also be derived or extracted from plants. The cellulose may be incorporated into the starch composition between about 1-10% by weight of the starch composition.

Additionally, herbs, herbal extracts, vitamins, minerals, yeast products, soy products, may be incorporated into the plant base. Further, the plant base may also include food sources that provide phytochemicals. A non-exclusive list phytochemicals include: carotenoids, lycopenes, beta cryptoxanthin, flavonoids, indoles, sulforaphane, isoflavones, allicin, genistein, polyphenols, anthocyanins, limonoids, sterols, capsaicin, elegiac acid and lignans.

In one example embodiment carotenoids are included in the plant base. In at least this example embodiment the carotenoids are included from a plant selected from a group consisting of carrots, cantaloupe, papaya, pumpkin, squash, sweet potatoes, broccoli, dried apricots, asparagus, kale, green leafy vegetables and combinations thereof. In related embodiments lycopenes are included in the plant base. The lycopenes are added with the addition of plants selected from a group consisting of tomatoes, tomato paste, tomato juice, guava, pink grapefruit, watermelon and combinations thereof. In other related embodiments, beta cryptoxanthin are included in the plant base. Beta cryptoxanthin are found in plants such as tangerines, papaya, oranges, peaches, mangoes, nectarines and combinations thereof.

In other example embodiments flavonoids extracted from plants such as soy, green tea, tomatoes, sweet potatoes, cruciferous vegetables such as broccoli, cabbage, brussels sprouts, mustard greens, kale, and cauliflower, citrus fruits, onions and combinations thereof can be used in the plant base. In other example embodiments, indoles and sulforaphane, which are commonly found in cruciferous vegetables are added to plant base. Examples of cruciferous vegetables include, but are not limited to cauliflower, cabbage, garden cress, bok choy, broccoli and brussels sprouts. In other related embodiments, isoflavones are included in plant base. Isoflavones are commonly found in legumes, such as beans, peas and lentils and soy products. In other related embodiments, allicin is added to the plant base, which can be found in plants such as onions and garlic. In example embodiments genistein is added through the addition of soy products, such as tofu. In other example embodiments, polyphenols can be added through the addition of green tea.

In yet other related embodiments, anthocyanins found in plants such as wild blueberries, bilberries and black berries can be included in plant base. Limonoids, found in citrus fruits such as clementine, grapefruit, kumquat, lemon, lime, mandarin, orange, tangerine and the like can also be added to plant base. In other embodiments, sterols from cruciferous vegetables, cucumbers, squash, sweet potatoes, soy foods, eggplant, whole grains, tomatoes and the like are included in plant base. In embodiments where the addition of capsaicin is desired, the phytochemical can be added by including chili peppers. Similarly, in embodiments where elegiac acid is desired strawberries can be included in plant base. The addition of lignans, can be achieved by the addition of nuts and seeds. It should be appreciated that the addition of certain plants will include more than one phytochemical listed herein. Further, extract(s) of the aforementioned plants can be added to specifically add a desired phytochemical or combination of phytochemicals to the plant base.

Other sources of important nutrients for animals may also include seaweed, kelp, blue green algae, spirulina, Irish moss, dulse, nori, kombu, wakeme, alfalfa, fenugreel seed, wheatgrass, barley grass and marine phytoplankton.

The plant material is used in an amount of about 6% to 90% of the plant mixture. In one example embodiment, the plant material is used in an amount of about 6-35% by weight of the plant mixture. It should be appreciated that the other plant sources, including various extracts, can be used to provide a final taste or consistency for the plant mixture. In embodiments where other plant sources are used, the total plant content is 6% to 90% by weight of the entire plant mixture. Further, one should appreciated that although FIG. 1 notes plant material for use in forming the plant base it may optionally comprise beef, pork, lamb, goat, horse, buffalo, venison, elk, moose, chicken, turkey, fish, or any other seafood, or any combination of two or more thereof.

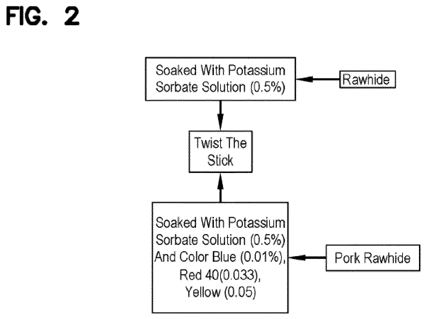

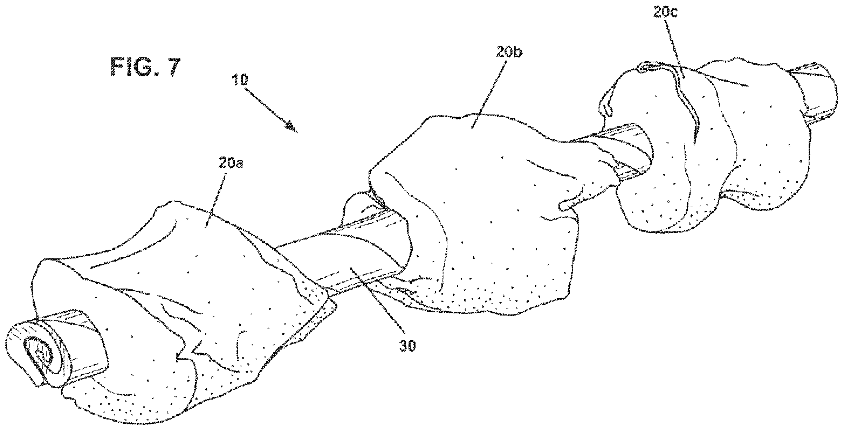

The process of forming a chew stick includes, but is not limited to the use of rawhide, or other similar materials to form an elongated section. It should be appreciated that the chew stick, as described herein may be made from several processes available to one skilled in the art; for example, extrusion, molding and the like are within the scope of the invention. In one example embodiment, the chew stick is prepared by shaping a piece of rawhide to form an elongated chew. As shown in FIG. 2, chew stick (illustrated in FIG. 7) is manufactured by taking a rawhide sheet and twisting the sheet to form an elongated stick-shape chew. As described in FIG 2, a first rawhide sheet is cut to an appropriate size and a second sheet of rawhide is also cut in the shape of a similarly sized proportion. As shown, the first sheet and second sheet may be rawhide from different animals. In at least this example embodiment, the second sheet is a pork rawhide. Each rawhide sheet is soaked in a potassium sorbate solution. As shown, the potassium sorbate solution is (0.5%). Moreover, the second sheet has color agents added to enhance the overall appearance of the sheet. In this manner, the second sheet will provide a darker meat-like color to provide an additional visual enhancement for the overall pet treat. Still referring to FIG. 2, second rawhide sheet is colored with Color Blue, Red 40 and Yellow. It is important to note that the concentrations listed are representative of concentrations that can be utilized. However one of ordinary skill in the art would readily appreciate that the physical characteristics and animal origin of the rawhide may require modifications in the combinations and concentrations of each coloring agents to achieve a desired chew stick appearance. The sheets of rawhide may also be flavored according to one of the processes described herein.

The second sheet is placed upon the first sheet in the same general orientation, the two rawhide sheets are twisted together, as described, to make a multi-component chew stick. Once the rawhide sheets are twisted together, they are dried. In one example embodiment the chew stick is dried in an oven at 40 degrees Celsius to 65 degrees Celsius for 4 to 5 hours. Upon removing the dried chew stick from the oven, the sticks are allowed to cool to allow for ease in handling

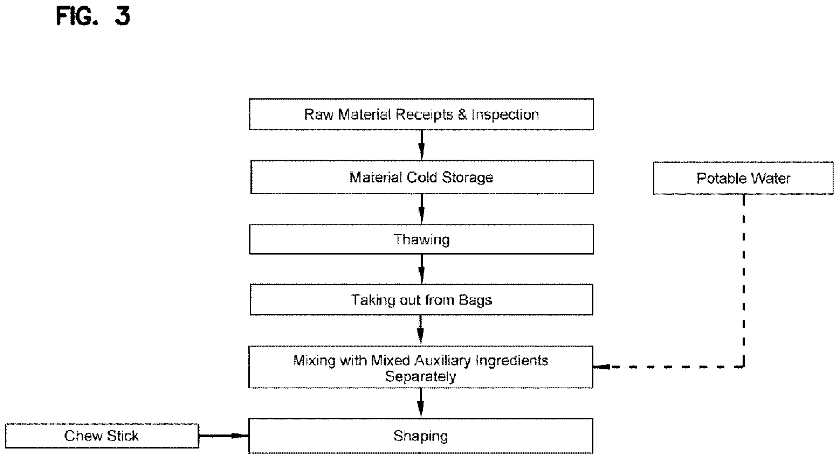

FIG. 3 describes one example method of receiving, storing and processing plant base to form a plant mixture. To that end, plant base can be stored at sub-zero temperatures, although fresh plant base is also within the scope of the invention. The frozen plant base is ready for further processing by thawing the plant base In some example embodiments, plant base is thawed using a microwave. Alternatively, the plant base can be thawed by other devices known by one of ordinary skill in the art. One such alternative device is a tempering device.

The frozen containers (i.e. bags) of plant base are thawed and the plant base is placed in a tumbler to begin the process of forming a plant mixture. Once the plant base begins the tumbling process, the plant base is combined with auxiliary ingredients forming a plant mixture. The plant base can be used in an amount between about 30% and about 90% by weight of the plant mixture, for example about 60% by weight of the plant mixture. In some example embodiments, the plant base and auxiliary ingredients can optionally be subjected to a vacuum to form a homogeneous plant mixture. The vacuum can remove entrapped air and can provide a more dense and homogenous blend. The vacuum can be applied at a level from about 0 to about 30 mm/Hg.

The plant mixture is prepared by mixing the plant base with auxiliary ingredients that may include a binding agent, a salt, a sugar, an acid, a mold inhibitor, a flavoring, an aroma compound, a coloring compound, or any combination of two or more thereof.

The binding agent can be used in an amount between about 10% and about 75% by weight of the plant mixture. In one example embodiment the binding agent is about 20% by weight of the plant mixture. The type and amount of binding agent can be selected so that the resulting product is not sticky and no residue is left on the pet owners' finger-tips or household's surfaces, such as carpets. For example, the binding agent can be added to "buffer" or to absorb fat content in the plant mixture. The binding agent can also facilitate the blending of the various ingredients and allow the plant mixture to hold a shape prior to being dried.

The binding agent can include, but is not limited to; oat flour, soy flour, wheat flour, rice flour, potato flour, corn flour, rye flour, buckwheat flour, chestnut flour, chickpea flour, atta flour, pea flour, bean flour, amaranth flour, arrowroot flour, taro flour, cattail flour, acorn flour, sorghum flour, or tapioca flour, or a combination of two or more thereof. The flour, in this case wheat flour, is incorporated in amount of no more than 25% by weight of the plant mixture.

The aroma compound or flavoring compound, provide palatability enhancement respectively and include, but are not limited to, garlic (e.g., garlic concentrate, garlic oil, garlic powder, garlic aroma), onion (e.g., onion concentrate, onion oil, onion powder, onion aroma), natural smoke flavor, hickory, mesquite, anchovy, chicken, lobster, tikka, tandoori, parsley, spinach, saffron, digestive (liquid stomach contents of an animal, e.g., chicken), phosphate, yeast, or enzymatic liver (pork, turkey or chicken), or any derivative thereof, or any combination of two or more thereof. Additionally salt may be added to enhance flavor and can also provide particle binding in forming plant mixture.

The aroma compound or flavoring compound can be used in an amount between about 0% and about 5% by weight of the plant mixture, for example less than about 1 % by weight of the plant mixture. The coloring compound can be used in an amount between about 0% and about 4% by weight of the plant mixture, for example less than about 1% by weight of the plant mixture. Flavoring compounds can be used in an amount between about 0% and about 0.5% by weight of the plant mixture, for example about .25% by weight of the plant mixture.

Coloring compounds provide cosmetic enhancement respectively and include, but are not limited to, caramel coloring, malliouse, allura red AC, annatto, astaxanthin, betanin or beetroot red, blue 2, brilliant black BN, brilliant blue FCF, brown FK, canthaxanthin, carmine, carotene, Color Blue, curcumin, erythrosine, orange number 1, iron oxide, orange B, ponceau 6R, red 40, red 2G, saffron, sunset yellow FCF, tartrazine, titanium dioxide, turmeric, yellow 5, yellow 2, or any combination of two or more thereof.

The humectant can be used to reduce water activity Water activity is a measure of the availability of water in a food for microbial growth such as molds. Water activity is a primary method of controlling antimicrobial or mold growth. One example range of water activity is an aW value of less than 0.7. The humectant including sugar, or sugar alcohols can be used in an amount between about 0% and about 20% by weight of the plant mixture, for example about 15% to 18% by weight of the plant mixture. The humectant, can include, but is not limited to fructose, dextrose, maltodextrin, honey, high-fructose corn syrup, maltose, brown sugar, coconut sugar, date sugar, sucanat, molasses, turbinado sugar, dextrin, glucose, sucrose, sucralose, glycerin or any derivative thereof, or any combination of two or more thereof.

The plant mixture may also include a mold inhibitor. A non-exclusive list of mold inhibitors include, but is not limited to, potassium sorbate, cultured whey, calcium propionate, cultured dextrose, cultured yeast, benzoic acid, acetic acid, or plum powder, or any derivative thereof or any combination of two or more thereof.

A moisturizing compound can be used in a range of between 2% and 20%. For example, a moisturizing compound, such as water will aid in formation of the plant mixture. For example, the moisture content of the plant mixture may be above 20% prior to drying the pet treat, but will achieve a moisture content below 20%, for example 18%, in the final pet treat product.

It should be appreciated that each of these ingredients other than the plant base is optional, such as the ingredients with a percentage range starting at 0%. After mixing the plant base with the auxiliary ingredients and optionally subjecting it to a vacuum in the tumbling device, the temperature of the mixture can be checked. If the temperature is too high the mixture can be cooled, by techniques such as the addition of CO₂. Conversely, if the temperature is too low additional heat is applied to facilitate the formation of the plant mixture.

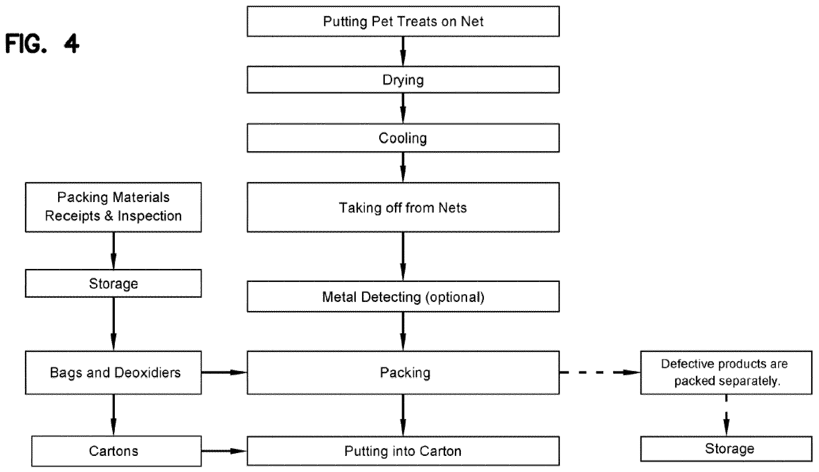

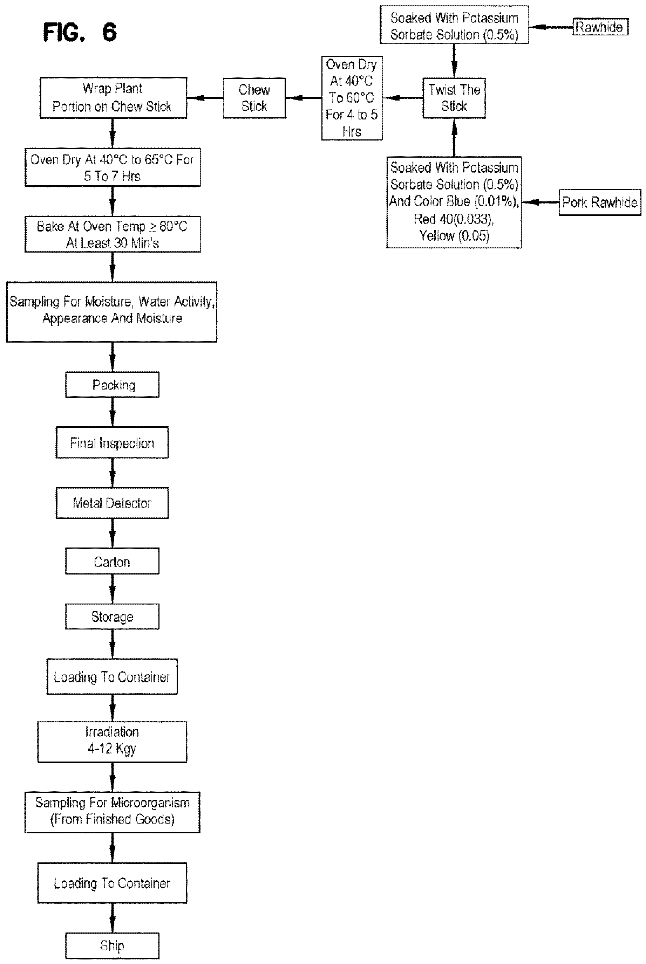

Referring now to FIGs. 4 and 6, where the plant mixture is transported to a production area and portioned. Each portion of plant mixture is positioned on the chew stick 30. FIG. 7 shows a perspective view of one or more portions 20 positioned on a chew stick 30. Although not wanting to be bound by any particular theory, the portions of plant mixture can be wrapped around chew stick in a manner that will require that a portion is pinched to remove any gaps. In an alternative embodiment the chew stick is pressed through the middle of portion, similar to placing meat or vegetables on a skewer when making shish kabobs.

In one embodiment, the portion of plant mixture may vary although portions between .25 inches and 1.5 inches are typical. The portions will typically range in weight, but will be between 25 and 4 oz. Furthermore, although the portions are generally made cylindrical in shape, the portions can be made with other shapes and conformations. For example, the geometrical shape of the base of the cylinder can be selected as desired, such as made round or flat. In addition, the portions can be shaped so as to form, generally round-shaped pieces, cubic-shaped pieces, cylindrical-shaped pieces, polygonal-shaped pieces, pyramid-shaped pieces, heart-shaped pieces, flat-wafer-shaped, or other more complex-shaped pieces.

Referring now to FIG. 4, once the desired number of portions is positioned on the chew stick, the pet treat may be moved to a surface that will form grooves on the outer surface of the portion. In this regard, the surface can be made of a number of materials. However, the materials must be compatible with the drying temperatures and duration. In one example embodiment, the surface is a net. A net allows for the weight of each pet treat to "nestle" on the netting and thus form grooves along the outer surface of the one or more portions.

The plant pieces can then be transferred via conveyor or manual transportation to a drying oven. The drying step is in an oven at about 40 degrees Celsius to about 60 degrees Celsius. In some example embodiments the drying time is at least 5 hours. In related embodiments, the drying time is between 5 to 7 hours. Additionally the pet treat may further be baked. The optional baking step is at a temperature of at least 80 degrees Celsius for at least 30 minutes.

Once the baking step is finished the pet treats are removed from the oven and allowed to cool. Cold air or any other cold gas is forced on the surface which transports the pet treats from the oven to packaging. Air or gas that is warmed by contact with the pet treats is re-circulated and passed through refrigerated plates to cool the air/gas and then the air/gas is blown again over the pet treat. This process can be repeated numerous times until the pet treats are cooled to a desired temperature.

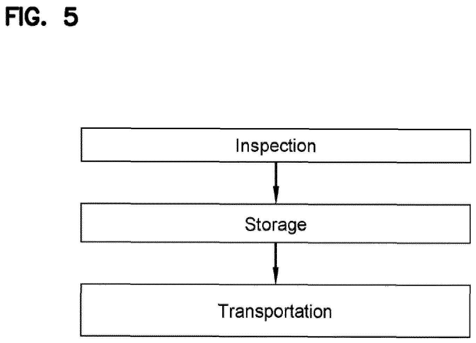

Referring now to FIGs. 5 and 6, where the cooled pet treats are removed from the surface and will have grooves along the outer surface of the one or more portions. This will give the pet treat the appearance of a grilled shish kabob. Prior to packaging, the pet treat may undergo a variety of quality control measures to detect for metal and microbial activity in the finished product. For example, prior to packaging, the pet treats can be sent through a metal detection device. If the presence of metal is detected in the pet treats, the contaminated pet treat is removed from the packaging step.

Upon removal from the netting, and optional quality control checks, the pet treats are transferred into packages. In one embodiment, air in the bags is displaced (either drawn via a vacuum or pushed with an inert gas or gas blend) so as to reduce the level of oxygen in the bags. Then the bags are filled with the pet treats and the bags are purged in an atmosphere filled with nitrogen or an inert gas such as argon, or a combination of these gases. In another embodiment, the bags are filled with the portions of pet treats in a modified atmosphere containing nitrogen, inert gas (e.g., argon), carbon dioxide, or carbon monoxide, or any combination of two or more these gases. Any of these gasses can comprise about 0% to about 100% by weight of the gas composition. In one embodiment, the bags of pet treats comprise an atmosphere that includes nitrogen gas, carbon dioxide, and carbon monoxide. The purpose of the gas introduction is to reduce the amount of oxygen in the bag.

In at least one example embodiment, the resulting pet treat is made such that it does not leave sticky or oily residue on the fingers of the pet owner or consumer who handles the pet treat. In general, typical meat or meat-based products include cooked meat with meat juice or fat may not be desirable by the pet owner or consumer Alternatively, the pet treats described herein offer a more suitable handling. To state another way, the pet treat leaves a minimum amount of residue on the fingers of the consumer. Moreover, the one or more portions allows for a pet treat that has increased palatability and good ingredients.

In addition, special blending techniques (e.g., vacuum blending as described in the above paragraphs) and other processes or techniques, maximize blending and reduce the occurrence of large chunks of plant in the plant mixture. The use of a dry oven with reduced humidity, as described in the above paragraphs, can produce pet treats with a substantially dry outer surface. This outer surface can form an outer dry surface to minimize the moisture from the one or more portions from bleeding out. Further, because the one or more portions are dried and the flavoring is found homogenously mixed the likelihood of transferring any dye or flavoring to a decorative surface is reduced because the dye or flavoring is less prone to contacting the decorative surface and is less prone to rub off if it does contact the decorative surface.

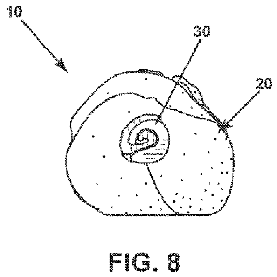

As shown in FIGs. 7-9, the final product is a pet treat 10 with one or more portions 20 positioned along a chew stick 30 with the appearance of a shish kabob. Referring to the ingredients and material described above, the pet treat 10 can comprise at least one rawhide section shaped to form a chew stick 30.

In some example embodiments, at least one rawhide section is soaked in a potassium sorbate solution prior to forming said chew stick. The process described above describes that the chew stick is placed in a potassium sorbate solution. Although one skilled in the art will readily be able to ascertain the precise concentration needed to provide sufficient anti-mold activity. For example, one concentration includes a concentration of potassium sorbate at 0.5% v/v. The chew stick can be formed in a variety of ways. In order to achieve a dual component appearance, one rawhide piece may be twisted where a portion of chew stick is colored to provide the appearance of a multi-layered chew stick. Referring again to FIG. 2, two rawhide pieces can be used. In some related embodiments, the at least two rawhide pieces are from different animal sources.

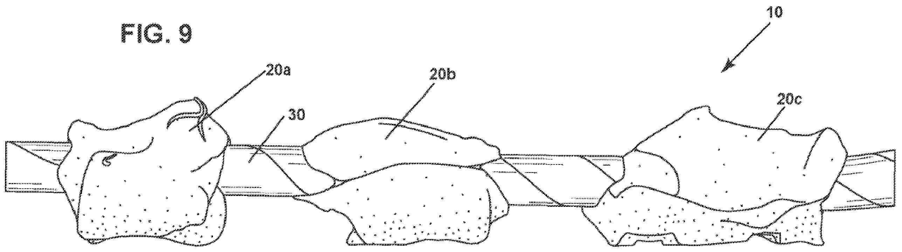

The one or more portions 20 are attached to the outside surface of the chew stick 30. If should be appreciated that the number of portions 20 placed along a chew stick will be related to consumer desire and commercial viability. However, the length of the chew stick, size of the one or more portions and proximity of the one or more portions to one another are all factors in determining the number of portions on the pet treat 10. As best shown in FIG. 9, each of the one or more portions are positioned in a manner that provide a space between the next adjacent portion where the outer surface of chew stick 30 is exposed. In some example embodiments, each of the one or more portions are positioned in a substantially equal distance from an adjacent portion. As described above, the one or more portions also comprise grooves on the outer surface.

Referring now to FIGs. 7 and 9 where pet treat is described showing three portions. As shown, each of the three portions 20a, 20b and 20c can be made from the same plant mixture formulation. Alternatively, pet treat can be made where at least two of the one or more portions on the pet treat 10 are from the same plant mixture formulation. In another al ternati ve embodiment each of the one or more portions on the pet treat 10 are a different plant mixture formulation. In at least these example embodiments the three portions are selected from a group consisting of cantaloupe, green beans, spinach, applies, pumpkin, sweet potatoes, blueberries, watermelon, asparagus, Brussel sprouts and combinations thereof. However, the specific plant mixture used for each portion is selected from a group consisting of apple, apricot, banana, bilberry, blackberry, blackcurrant, blueberry, coconut, currant, cherry, cherimoya, clementine, date, damson, durian, elderberry, fig, feijoa, gooseberry, grape, grapefruit, huckleberry, jackfruit, jambul, jujube, kiwifruit, kumquat, lemon, lime, loquat, lychee, mango, mangostine, melon, cantaloupe, honeydew, watermelon, rock melon, nectarine, orange, passionfruit, peach, pear, plum, prune, pineapple, pomegranate, pomelo, raisin, raspberry, rambutan, redcurrant, satsuma, strawberry, tangerine, ugli fruit, artichoke, arugula, asparagus, avocado, bamboo shoots, bean sprouts, beans, beet, Belgian endive, bell pepper, broccoli, brussels sprouts, burdock root, cabbage, calabash, capers, carrot, cassava, cauliflower, celery, celery root, corn, maize, candle corn, cucumber, radish, edamame, eggplant, garlic, fennel, fiddlehead, galangal, ginger, grape leaves, beet greens, collard greens, dandelion greens, kale, mustard greens, rapini, spinach, Swiss chard, turnip greens, hearts of palm, horseradish, Jerusalem artichoke, jicama, leeks, lemongrass, lettuce, mushrooms, okra, olive, onion, scallions, parsley, parsley root, parsnip, peas, peppers, plantain, potato, pumpkin, purslane, radicchio, radish, rutabaga, shallots, spinach, squash, sweet potato, tomato, turnip, water chestnut, water spinach, watercress, winter melon, yams, zucchini and combinations thereof.

While various embodiments of the present invention have been described above, it should be understood that they have been presented by way of example, and not limitation. It will be apparent to persons skilled in the relevant art(s) that various changes in form and detail can be made therein without departing from the spirit and scope of the present invention. In fact, after reading the above description, it will be apparent to one skilled in the relevant art(s) how to implement the invention in alternative embodiments. Thus, the present invention should not be limited by any of the above-described exemplary embodiments. Accordingly, all suitable modifications and equivalents should be considered as falling within the spirit and scope of the invention.

The above specification, examples and data provide a complete description of the manufacture and use of the composition of the invention. Since many embodiments of the invention can be made without departing from the spirit and scope of the invention, the invention resides in the claims hereinafter appended.

Further disclosed herein is the subject-matter of the following clauses:
1. A process for making a pet treat comprising:
   forming a plant mixture into portions;
   positioning one or more portions on a chew stick, thereby forming a pet treat; and
   drying the pet treat.
2. The process of clause 1, wherein the plant mixture comprises mixing a plant base with one or more auxiliary ingredients.
3. The process of clause 2, wherein the one or more auxiliary ingredients include a binding agent, a salt, a sugar, an acid, a mold inhibitor, a flavoring, an aroma compound, a coloring compound, phytochemical or any combination of two or more thereof.
4. The process of any of clauses 1-3, wherein the drying is in an oven at about 40 degrees Celsius to about 60 degrees Celsius.
5. The process of any of clauses 1-4, wherein the drying time is at least 5 hours.
6. The process of any of clauses 1-4, wherein the drying time is between 5 to 7 hours.
7. The process of any of clauses 1-6, further comprising baking the pet treat.
8. The process of clause 7, wherein the baking is at a temperature of at least 80 degrees Celsius.
9. The process of any of clauses 7-8, wherein the baking is for at least 30 minutes.
10. The process of any of clauses 1-9, further comprising the step of packing a plurality of pet treats in a container.
11. The process of any of clauses 1-10, wherein the chew stick is formed by soaking rawhide in a potassium sorbate solution, twisting the rawhide, thereby forming a chew stick and drying the chew stick at 40 degrees Celsius to 65 degrees Celsius.
12. The process of any of clause 11, wherein the concentration of potassium sorbate is 0.5% v/v.
13. The process of any of clauses 1-12, wherein the drying time of the chew stick prior to having the one or more portions attached thereto is at least about 4 hours.
14. The process of any of clauses 1-13, wherein the positioning step comprises wrapping the one or more portions around the chew stick.
15. The process of any of clauses 1-14, wherein the one or more portions, comprises at least three portions and wherein each of the at least three portions are positioned substantially equal distance from the adjacent portion(s).
16. The process of any of clauses 1-15, wherein the plant base comprises a plant selected from a group consisting of apple, apricot, banana, blackberry, blackcurrant, blueberry, coconut, cherry, cherimoya, date, durian, fig, feijoa, gooseberry, grape, grapefruit, jackfruit, jambul, kiwifruit, kumquat, lemon, lime, loquat, lychee, mango, mangosteen, melon, cantaloupe, honeydew, watermelon, nectarine, orange, passionfruit, peach, pear, plum, prune, pineapple, pomegranate, pommelo, raspberry, rambutan, redcurrant, satsuma, strawberry, tangerine, ugli fruit and combinations thereof.
17. The process of any of clauses 1-16, wherein the plant base comprises a plant selected from a group consisting of artichoke, asparagus, avocado, bamboo shoots, bean sprouts, beans, beet, endive, bell pepper, broccoli, brussels sprouts, cabbage, calabaza, carrot, cauliflower, celery, , cucumber, radish, eggplant, garlic, fiddlehead, galangal, ginger, beet greens, collard greens, dandelion greens, kale, mustard, spinach, Swiss chard, turnip greens, Jerusalem artichoke, jicama, lettuce, mushrooms, okra, onion, parsley, parsnip, peas, peppers, plantain, pumpkin, radicchio, radish, rutabaga, spinach, squash, sweet potato, tomato, turnip, water chestnut, yams, and combinations thereof.
18. The process of any of clauses 1-17, further comprising placing the pet treat on a surface prior to drying, wherein the surface forms grooves on the outer layer of the one or more portions.
19. A process for making a pet treat, the steps comprising:
   forming a plant mixture into portions;
   positioning one or more portions on a chew stick, thereby forming a pet treat, wherein the one or more portions are positioned on the external surface of the chew stick,
   placing the pet treat on a surface, wherein the net forms grooves on the outer surface of the one or more portions;
   drying the pet treat in an oven at about 40 degrees Celsius to about 60 degrees Celsius for at least 5 hours,
   baking the pet treat at a temperature of at least 80 degrees Celsius for at least 30 minutes; and
   packing a plurality of pet treats in a container.
20. A pet treat comprising:
   at least one rawhide section shaped to form a chew stick and
   one or more portions, wherein the one or more portions are disposed on the outside surface of the chew stick.
21. The pet treat of clause 20, wherein the one or more portions comprises a plant mixture which comprises a plant base with one or more auxiliary ingredients.
22. The pet treat of any of causes 20-21, wherein the one or more auxiliary ingredients include a binding agent, a moisturizing compound, a salt, a sugar, an acid, a mold inhibitor, a flavoring compound, an aroma compound, a coloring compound and any combination of two or more thereof.
23. The pet treat of any of clauses 20-22, wherein each of the one or more portions on the pet treat is made from the same plant mixture formulation.
24. The pet treat of any of clauses 20-22, wherein at least two of the one or more portions on the pet treat are from the same plant mixture formulation.
25. The pet treat of any of clauses 20-22, wherein each of the one or more portions on the pet treat are a different plant mixture formulation.
26. The pet treat of any of clauses 21-25, wherein the plant base comprises a plant selected from a group consisting of apple, apricot, banana, blackberry, blackcurrant, blueberry, coconut, cherry, cherimoya, date, durian, fig, feijoa, gooseberry, grape, grapefruit, jackfruit, jambul, kiwifruit, kumquat, lemon, lime, loquat, lychee, mango, mangosteen, melon, cantaloupe, honeydew, watermelon, nectarine, orange, passionfruit, peach, pear, plum, prune, pineapple, pomegranate, pommelo, raspberry, rambutan, redcurrant, satsuma, strawberry, tangerine, ugli fruit, artichoke, asparagus, avocado, bamboo shoots, bean sprouts, beans, beet, endive, bell pepper, broccoli, brussels sprouts, cabbage, calabaza, carrot, cauliflower, celery, , cucumber, radish, eggplant, garlic, fiddlehead, galangal, ginger, beet greens, collard greens, dandelion greens, kale, mustard, spinach, Swiss chard, turnip greens, Jerusalem artichoke, jícama, lettuce, mushrooms, okra, , onion, parsley, parsnip, peas, peppers, plantain, pumpkin, radicchio, radish, rutabaga, spinach, squash, sweet potato, tomato, turnip, water chestnut, yams, and combinations thereof.
27. The pet treat of any of clauses 20-26, wherein the one or more portions comprise grooves on the outer surface.
28. The pet treat of any of clauses 20-27, wherein the at least one rawhide section is soaked in a potassium sorbate solution prior to forming said chew stick.
29. The pet treat of clause 28, wherein the concentration of potassium sorbate is 0.5% v/v.
30. The pet treat of any of clauses 20-29, wherein the one or more portions are wrapped around the chew stick.
31. The pet treat of any of clauses 20-30, wherein the one or more portions, comprises at least three portions and wherein each of the at least three portions are positioned substantially equal distance from an adjacent portion(s).
32. The pet treat of any of clauses 20-31, wherein the at least one rawhide section comprises two rawhide sheets twisted together.
33. The pet treat of any of clauses 20-32, wherein the pet treat comprises one or more coloring compounds selected from a group consisting of caramel coloring, malliouse, allura red AC, annatto, astaxanthin, betanin or beetroot red, blue 2, brilliant black BN, brilliant blue FCF, brown FK, canthaxanthin, carmine, carotene, Color Blue, curcumin, erythrosine, orange number 1, iron oxide, orange B, ponceau 6R, red 40, red 2G, saffron, sunset yellow FCF, tartrazine, titanium dioxide, turmeric, yellow 5, yellow 2, or any combination of two or more thereof.
34. The pet treat of any of clauses 20-34, wherein the at least one rawhide section comprises two rawhide sheets.
35. The pet treat of clause 34, wherein each of two rawhide sheets are from a different animal source.
36. The pet treat of any of clauses 20-35, wherein each of the one or more portions are substantially free from a meat product.
37. The pet treat of any of clauses 20-36, wherein the one or more portions comprises at least three portions and wherein each of the portions comprises a plant mixture comprising a plant base with one or more auxiliary ingredients and wherein each of the one or more portions on the pet treat are a different plant mixture formulation and wherein the pet treat comprises portions each having at least one of cantaloupe, green beans, spinach, apples, pumpkin, sweet potatoes, blueberries, watermelon, asparagus and brussel sprouts.
38. The pet treat of any of clauses 20-37, wherein the plurality of the portions are positioned on the external surface of the chew stick.
39. The pet treat of any of clauses 20-38, wherein the pet treat is in a lollipop form.

## Claims

1. A pet treat comprising:
a chew stick;
at least two portions disposed on the outside surface of the chew stick, wherein the at least two portions comprises a plant mixture, which comprises a plant base with one or more auxiliary ingredients; and
wherein the one or more portions are at least partially wrapped around the chew stick.

2. The pet treat of claim 1, wherein the one or more auxiliary ingredients include a binding agent, a moisturizing compound, a salt, a sugar, an acid, a mold inhibitor, a flavoring compound, an aroma compound, a coloring compound and any combination of two or more thereof.

3. The pet treat of claim 1 wherein each of the at least two portions on the pet treat is made from the same plant mixture formulation.

4. The pet treat of claim 1 wherein at least one of the at least two portions on the pet treat is of a different plant mixture formulation.

5. The pet treat of claim 1, wherein the at least one section comprises rawhide.

6. The pet treat of any of claims 1-5, wherein the plant base comprises a plant selected from a group consisting of apple, apricot, banana, blackberry, blackcurrant, blueberry, coconut, cherry, cherimoya, date, durian, fig, feijoa, gooseberry, grape, grapefruit, jackfruit, jambul, kiwifruit, kumquat, lemon, lime, loquat, lychee, mango, mangosteen, melon, cantaloupe, honeydew, watermelon, nectarine, orange, passionfruit, peach, pear, plum, prune, pineapple, pomegranate, pommelo, raspberry, rambutan, redcurrant, satsuma, strawberry, tangerine, ugli fruit, artichoke, asparagus, avocado, bamboo shoots, bean sprouts, beans, beet, endive, bell pepper, broccoli, brussels sprouts, cabbage, calabaza, carrot, cauliflower, celery, cucumber, radish, eggplant, garlic, fiddlehead, galangal, ginger, beet greens, collard greens, dandelion greens, kale, mustard, spinach, Swiss chard, turnip greens, Jerusalem artichoke, jicama, lettuce, mushrooms, okra, onion, parsley, parsnip, peas, peppers, plantain, pumpkin, radicchio, radish, rutabaga, spinach, squash, sweet potato, tomato, turnip, water chestnut, yams, and combinations thereof.

7. The pet treat of any one of claims 1-6, wherein at least one of the at two portions comprise grooves on the outer surface.

8. The pet treat of any of claims 1-7, wherein the at least two portions include three portions and are positioned equal distance from an adjacent portion(s).

9. The pet treat of any of claims 1-8, wherein the chewstick comprises at least two sheets twisted together.

10. The pet treat of any of claims 1-9, wherein the at least two portions are free from a meat product.

11. The pet treat of any of claims 1-10, wherein the plant material is about 6-35% by weight of the plant mixture.

12. The pet treat of any of claims 1-11, wherein the pet treat comprises one or more coloring compounds selected from a group consisting of caramel coloring, malliouse, allura red AC, annatto, astaxanthin, betanin or beetroot red, blue 2, brilliant black BN, brilliant blue FCF, brown FK, canthaxanthin, carmine, carotene, Color Blue, curcumin, erythrosine, orange number 1, iron oxide, orange B, ponceau 6R, red 40, red 2G, saffron, sunset yellow FCF, tartrazine, titanium dioxide, turmeric, yellow 5, yellow 2, or any combination of two or more thereof.

13. The pet treat of any of claims 1-8, wherein the chewstick comprises two rawhide sheets twisted together.

14. The pet treat of claim 13, wherein each of two rawhide sheets are from a different animal source.
